Europäisches Patentamt

**European Patent Office**

**Office européen des brevets**

(19)

(11) Numéro de publication: **0 011 156**

**B1**

(12)

# FASCICULE DE BREVET EUROPEEN

(45) Date de publication du fascicule du brevet: **26.05.82**

(51) Int. Cl.³: **A 22 C 25/14**

(21) Numéro de dépôt: **79104086.8**

(22) Date de dépôt: **22.10.79**

(54) Appareil d'étêtement et d'éviscération des poissons.

(30) Priorité: **10.11.78 SE 7811632**

(43) Date de publication de la demande:
**28.05.80 Bulletin 80/11**

(45) Mention de la délivrance du brevet:
**26.05.82 Bulletin 82/21**

(84) Etats contractants désignés:
**DE FR GB**

(56) Documents cités:
**DE - A - 2 556 135**
**DE - C - 377 772**
**FR - A - 595 590**
**FR - A - 816 825**
**FR - A - 837 346**
**FR - A - 1 012 870**
**FR - A - 2 147 378**
**US - A - 1 632 200**
**US - A - 2 355 509**
**US - A - 3 525 121**

(73) Titulaire: **PRODUITS FINDUS S.A.**
**Case postale 66**
**CH-1800 Vevey (CH)**

(72) Inventeur: **Dafgard, Ingvar**
**Basungatan 8**
**Helsingborg (SE)**

(74) Mandataire: **Archambault, Jean et al,**
**55, avenue Nestlé**
**CH-1800 Vevey (CH)**

Courier Press, Leamington Spa, England.

Appareil d'étêtement et d'éviscération des poissons

La présente invention a trait à un appareil d'étêtement et d'éviscération des poissons, dans lequel les entrailles du poisson restent attachées à la tête et sont retirées du tronc du poisson lors de l'opération d'étêtement. L'appareil comporte un dispositif d'entaille de la nuque du poisson situé à proximité d'un dispositif d'entraînement du poisson ainsi que des dispositifs mobiles pour le maintien respectivement du tronc et de la tête lors de l'étêtement.

Dans les procédés et appareils connus d'étêtement et d'éviscération, nuque et gorge du poisson sont entaillées de part et d'autre de l'appareil digestif du poisson, puis la tête du poisson est arrachée du tronc dans un mouvement soit axial soit radial par rapport à l'axe du tronc du poisson, jusqu'à décollement complet de la tête. Mais l'éviscération du poisson reste alors incomplète.

Le brevet DE—C—377'772 donne une description des opérations manuelles à effectuer lors de l'éviscération des poissons comprenant une entaille de la nuque, une ouverture dans l'abdomen puis le rabattement de la tête et l'arrachage des entrailles avec la tête en tirant celle-ci vers l'arrière le long du tronc. Il n'y a cependant aucune indication sur la manière dont la succession des opérations envisagées pourrait être réalisée mécaniquement.

Le brevet FR—A—595'590 concerne un appareil pour l'étêtement et l'éviscération des poissons selon lequel le tronc et la tête du poisson sont respectivement disposés dans des godets portés par deux chaînes sans fin parallèles cheminant à la même vitesse et après tranchage de la nuque la tête est séparée du tronc par arrachage latéral et torsion de la tête par rapport au tronc produits par le mouvement divergeant des chaînes. Une compression du tronc contribue à expulser les viscères qui sont maintenues sur une certaine distance entre un tambour et une courroie.

La brevet FR—A—2'147'378 préconise la séparation du tronc et de la tête par tranchage et divergeance de deux tapis situés dans le même plan horizontal de chaque côté d'un sabot déflecteur et cheminant à la même vitesse.

Tous les dispositifs des antériorités discutées effectuent la séparation du tronc et la tête par un mouvement radial par rapport à l'axe du poisson qui est dans certains cas associé à une torsion.

Un tel arrachage n'est pas suffisamment progressif et ne permet qu'une éviscération incomplète.

L'appareil selon invention se propose d'apporter une solution assurant une éviscération complète du poisson. Selon celui-ci, les entrailles du poisson restent attachées à la tête et sont retirées du tronc du poisson lors de l'arrachement de la tête. Il comporte un dispositif d'entaille de la nuque du poisson ainsi que des dispositifs mobiles pour l'entraînement de la tête et du tronc lors de l'étêtement, dans lequel le dispositif d'entraînement sert de maintien à l'une seulement des parties du poisson de part ou d'autre de la nuque. Il est caractérisé par le fait que le long du dispositif d'entraînement sont disposés successivement, vus dans le sens de déplacement du poisson, un dispositif d'entaille de la nuque, une glissière cintrée formant une gorge avec le dispositif d'entraînement, un dispositif d'incision ventrale et un dispositif de maintien de l'autre partie du poisson, dispositif disposé parallèlement au dispositif d'entraînement et mobile par rapport à celui-ci.

Il résulte de cette disposition des dispositifs d'entraînement et de maintien un déplacement relatif de la tête le long du tronc du poisson vers l'arrière de celui-ci. Il peut être bon de préciser que, comme dans les procédés connus, l'entaille de la nuque sectionne la grande arête. L'arrachement de la tête et des entrailles se fait de façon progressive; on évite une rupture des entrailles soumises à la traction.

Dans une version préférentielle de l'appareil, l'angle formé entre tête et tronc rabattus est sensiblement de 90°. Toujours dans une version préférentielle, l'entaille de la nuque se fait au cours d'un déplacement continu du poisson tout entier, et le déplacement relatif entre tête et tronc est alors obtenu soit par une accélération momentanée du tronc soit par une décélération momentanée de la tête du poisson. Enfin, toujours dans une version préférentielle, l'entaille de la nuque est suivie d'une entaille ventrale constituée par des incisions longitudinales des flancs du poisson; lors du traitement de merlan bleu, par exemple, de telles incisions ventrales se sont révélées utiles pour des poissons dont la taille dépasse la moyenne.

Les dessins ci-joints représentent la principe de fonctionnement de l'appareil selon l'invention ainsi qu'un exemple de réalisation. Dans les dessins:

Fig. 1 a—e montre de façon schématique l'entaille de la nuque, l'abaissement de la tête, puis le déplacement de celle-ci le long du corps du poisson jusqu'à séparation complète du tronc;

Fig. 2 montre en perspective et coupe partielle une forme d'exécution préférentielle de l'appareil selon l'invention;

Fig. 3 a—c et

Fig. 4 a—c donnent une vue en plan et schématisée des stades de traitement d'un poisson sur un appareil selon l'invention.

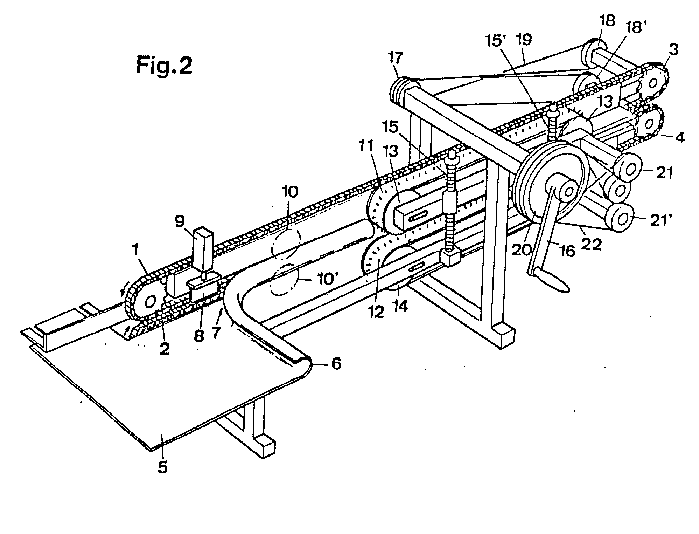

Dans sa forme d'exécution représentée à la Fig. 2, l'appareil se compose:

a) d'un dispositif constitué d'une paire de chaînes sans fin tendues et entraînées chacune par des pignons (respectivement 3 et 4) superposées, dispositif formant un transfer mécanique dans lequel la tête du poisson est saisie entre la partie supérieure de la chaîne basse 2 et la partie inférieure de la chaîne supérieure 1 animées d'un mouvement représenté par des flèches entraînant le poisson tout entier;

b) d'une tablette 5 sur laquelle le poisson à traiter est livré couché sur son flanc droit, la nuque la première, au moyen par exemple d'une bande transporteuse (non représentée), tablette munie d'une glissière 6 cintrée (concave) et coudée dont une extrémité forme une gorge 7 avec le dispositif d'entraînement susmentionné et dont l'autre est sensiblement perpendiculaire à celui-ci afin de receptionner le poisson livré sur la tablette 5;

c) d'un couteau dont la lame 8 est mobile verticalement de façon à se trouver en position basse à l'arrivée d'un poisson et susceptible de se relever aussitôt la nuque du poisson entaillée, lame actionnée en l'espèce par des moyens pneumatiques 9 commandés de façon automatique par un palpeur (non représenté) situé à proximité du couteau;

d) de deux lames circulaires à inciser 10 et 10' susceptibles de se rapprocher l'une de l'autre au passage du tronc d'un poisson dont un palpeur (non représenté) aura détecté une taille supérieure à la moyenne, lames animées d'un mouvement circulaire pour l'incision ventrale et commandées elles aussi de façon pneumatique;

e) d'un dispositif constitué d'une paire de tapis roulants 11 et 12 tendus en entraînés chacun par des poulies (respectivement 13 et 14) superposées, dispositif formant un transfert mécanique dans lequel le tronc du poisson est saisi par les deux tapis roulants 11 et 12 entraînés d'un mouvement simultané et fermement maintenu par des pointes disposées sur les tapis roulants, l'écrasement du tronc d'un poisson de taille supérieure à la moyenne étant d'ailleurs évité par un écartement supplémentaire des deux tapis roulants dont l'un est mobile par rapport à l'autre sur une tige garnie de ressorts 15, 15';

f) d'un élément moteur — représenté un l'espèce par une manivelle 16 — et d'un système de transmission de la force motrice d'une part sur les roues dentées 3 et 4 du dispositif d'entraînement au moyen de galets 17, 18 et 18' reliés entre eux par au moins une courroie de transmission 19, d'autre part sur les galets d'entraînements 13 et 14 des deux tapis roulants au moyen de la poulie 20 et des galets 21 et 21' reliés entre eux par au moins une courroie de transmission 22, système de transmission ayant la particularité que la multiplication de la vitesse angulaire de l'entraînement des tapis roulants est supérieure à celle du dispositif d'entraînement.

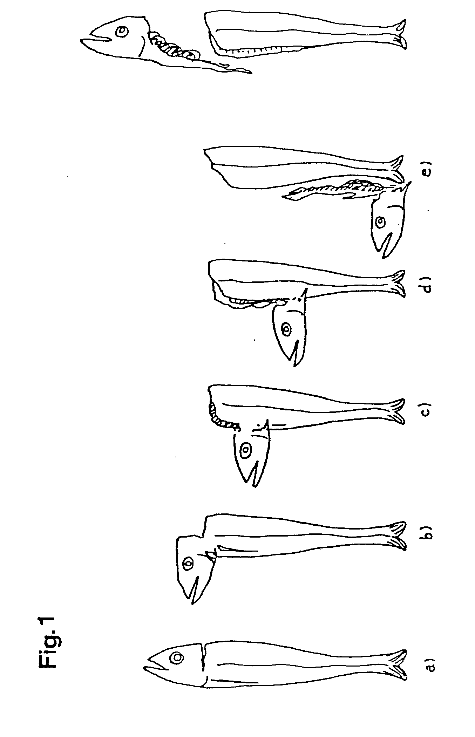

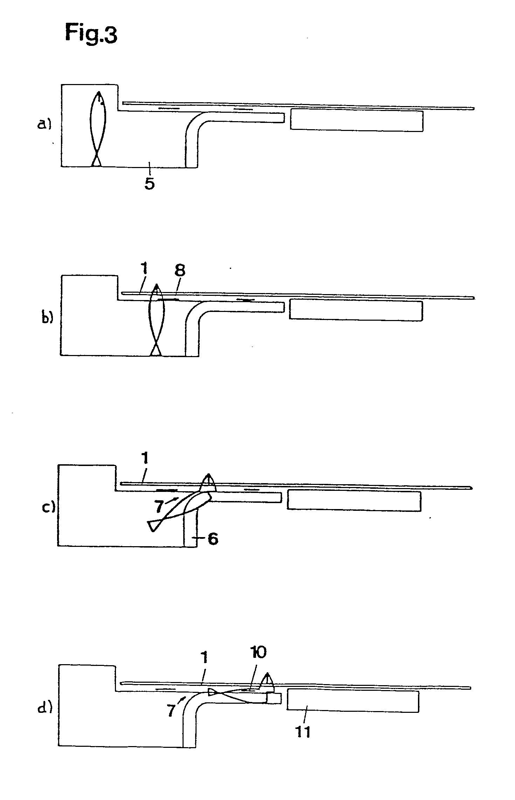

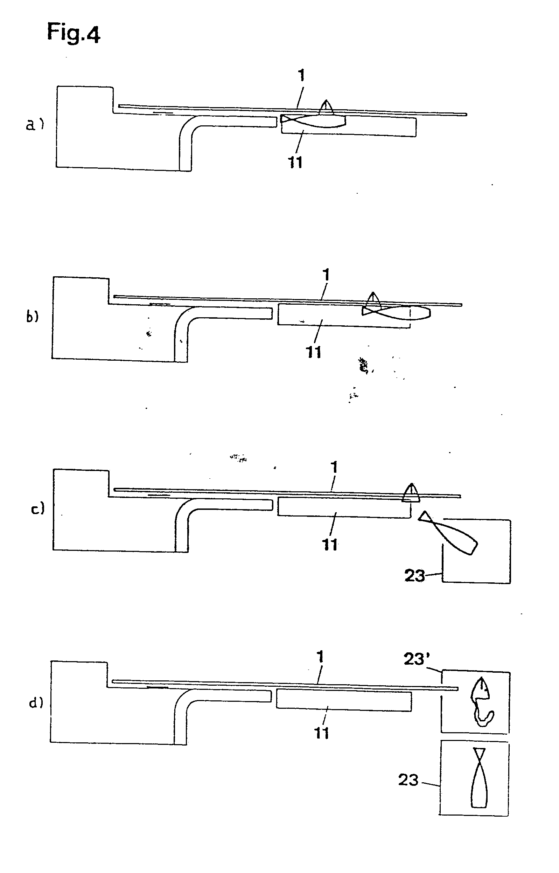

Le mode de fonctionnement d'un appareil selon l'invention peut être représenté par les divers stades de traitement du poisson: couché sur l'un de ses flancs — ici le flanc droit —, le poisson est livré la nuque la première sur la tablette 5 (cf. Fig. 3a) et pris en charge par les chaînes d'entraînement qui l'entraînent jusqu'à la lame 8 où il est énuqué (cf. Fig. 3b). Le poisson se présente alors comme représenté à la Fig. 1a, la lame 8 s'étant effacée pour ne pas trancher l'appareil digestif et la gorge du poisson. Tandis que la tête est entraînée par les chaînes 1, 2, le tronc du poisson vient heurter la glissière 6 qui le rabat contre le dispositif d'entraînement de façon à le faire entrer dans la gorge 7 (cf. Fig. 3c). Une fois le tronc rabattu, le poisson se présente de la façon représentée à la Fig. 1b. Il est alors entraîné (cf. Fig. 3d) en direction du tapis roulant 11 et subit le cas échéant l'incision ventrale et longitudinale de la lame circulaire 10. Puis le tronc du poisson est pris en charge par les tapis roulants 11 et 12 (cf. Fig. 4a) dont la vitesse d'avancement est supérieure à celle des chaînes d'entraînement 1 et 2, de sorte qu'il se produit un mouvement relatif de la tête le long du tronc vers l'arrière du poisson, ainsi que cela est aux Fig. 1c et d. Lorsque le tronc du poisson atteint la fin des tapis roulants (cf. Fig. 4b), la tête et l'appareil digestif en sont entièrement détachés, comme cela est représenté à la Fig. 1e.

La vitesse d'avancement des tapis roulants étant supérieure à celle des chaînes d'entraînement, le tronc du poisson est éjecté de l'appareil le premier (cf. Fig. 4c) et recueilli dans un bac 23 ou tout autre moyen adéquat. Le dispositif d'entraînement prolongé au-delà des tapis roulants permet de recueillir la tête et l'appareil digestif dans des bacs séparés 23' de deux destinés aux troncs des poissons et d'effectuer de la sorte un tri.

Tel que représenté à la Fig. 2, l'appareil selon l'invention est destiné au traitement de poissons de forme allongée plutôt qu'aplatie. En revanche, à l'essai, un tel appareil a donné des résultats parfaitement satisfaisants pour le traitement de merlans bleus, et cela même sur du poisson livré surgelé.

Il va sans dire que l'appareil selon l'inven l'invention ne se limite pas seulement à la forme d'exécution décrite ci-dessus. En particulier, la lame 8 à énuquer peut être actionnée de façon électrique et déclenchée par un détecteur optique; au lieu d'effectuer un mouvement vertical et se présenter sous forme de guillotine, elle peut effectuer un mouvement circulaire. Elle peut par exemple se présenter sous la forme d'un couteau hélicoïdal dont l'axe de rotation est parallèle à la trajectoire du poisson sur la bande transporteuse et qui est en synchronisme avec la bande transporteuse de sorte que, pour une révolution du couteau hélicoïdal, le

déplacement linéaire du poisson sur la bande transporteuse corresponde au pas de l'hélice. Cette variante d'exécution a l'avantage de permettre un travail à cadence plus rapide. De même les lames circulaires peuvent être remplacées, par exemple, par des lames pointues incisant le ventre du poisson lors du déplacement de celui-ci; selon les espèces ou la taille des poissons traités, ces lames peuvent être supprimées ou ramenées à une seule effectuant une incision plus profonde. Les tapis roulants 11 et 12 peuvent être munis de cannelures, stries, dents ou autres ventouses permettant de maintenir le tronc du poisson en place pendant l'enlèvement de la tête et de l'appareil digestif; à la limite, les moyens prévus sur le tapis roulant de support 12 rendront utile la présence d'un tapis roulant de maintien. Pour assurer un arrachage régulier et progressif de la tête de tronc, le dispositif comprenant les deux tapis roulants est maintenu face au dispositif d'entraînement par un bâti assurant la rigidité de l'ensemble de l'appareil, mais l'ouverture de la gorge 7 peut être réglable par simple déplacement des tablettes 5 et glissière 6 par rapport au dispositif d'entraînement afin de permettre le traitement de poissons d'une taille moyenne supérieure; dans le même ordre d'idées on peut régler différemment l'écartement moyen des chaînes 1 et 2 du dispositif d'entraînement, celui des tapis roulants 11 et 12 et celui des lames appelées à coopérer. Enfin, il est évident que le mouvement du dispositif d'entraînement et des tapis peut être obtenu par tout autre moyen, et notamment par un ou plusieurs moteurs électriques les actionnant, la seule condition étant qu'il en résulte un mouvement relatif de "marche arrière", du dispositif maintenant la tête par rapport à celui maintenant le tronc.

Une qualité de la forme d'exécution de l'appareil représenté dans le dessin annexé consiste dans sa simplicité contructive et de réglage.

**Revendications**

1. Appareil d'étêtement et d'éviscération des poissons, selon lequel les entrailles du poisson restent attachés à la tête et sont retirées du tronc du poisson lors de l'arrachement de la tête, et comportant un dispositif d'entaille (8) de la nuque du poisson ainsi que des dispositifs mobiles pour l'entraînement (1, 2) de la tête et du tronc lors de l'étêtement et dans lequel le dispositif d'entraînement (1, 2) sert de maintien à l'une seulement des parties du poisson de part ou d'autre de la nuque, caractérisé par le fait que le long du dispositif d'entraînement (1, 2) sont disposés successivement, vus dans le sens de déplacement du poisson, un dispositif d'entaille (8) de la nuque, une glissière cintrée (6) formant une gorge (7) avec le dispositif d'entraînement (1, 2), un dispositif d'incision ventrale (10, 10') et un dispositif de maintien de l'autre partie du poisson (11, 12), dispositif disposé parallèlement au dispositif d'entraînement (1, 2) et mobile par rapport à celui-ci.

2. Appareil selon la revendication 1, caractérisé par le fait que le dispositif d'entraînement (1, 2) sert de maintien à la tête du poisson et que la gorge (7) est d'une largeur proportionnée à l'épaisseur du tronc du poisson à traiter.

3. Appareil selon les revendications 1 et 2, caractérisé par le fait que le dispositif d'entraînement de la tête est constitué d'une paire de chaînes (1, 2) sans fin superposées.

4. Appareil selon les revendications 1 et 2, caractérisé par le fait que le dispositif de maintien de l'autre partie du poisson consiste en un dispositif de tapis roulants (11, 12) superposés pour le maintien du tronc du poisson.

5. Appareil selon les revendications 1 et 4, caractérisé par le fait que l'un des tapis roulants (11) est mobile par rapport à l'autre du fait d'une suspension élastique (15, 15').

6. Appareil selon les revendications 1 et 4, caractérisé par le fait que l'un au moins des tapis roulants (11, 12) est muni de pointes.

7. Appareil selon les revendications 1 à 4, caractérisé par le fait que les dispositifs d'entraînement (1, 2) de la tête et de maintien (11, 12) du tronc sont reliés à un élément moteur (16) unique ay moyen d'une transmission (17, 20) à multiplication différenciée de la vitesse angulaire pour chacun d'eux.

**Patentansprüche**

1. Vorrichtung zum Köpfen und Ausnehmen von Fischen, bei der die Innereien des Fisches am Kopf befestigt bleiben und vom Rumps des Fisches während des Wegreißens des Kopfes weggezogen werden und mit einer Einschneideinrichtung (8) des Nackens des Fisches sowie bewegbaren Einrichtungen zum Fördern (1, 2) des Kopfes und des Rumpfes beim Köpfen und wobei die Fördereinrichtung (1, 2) zum Halten an lediglich einem der Teile des Fisches beiderseits des Nackens dient, dadurch gekennzeichnet, daß längs der Fördereinrichtung (1, 2) aufeinanderfolgend in Förderrichtung des Fisches gesehen angeordnet sind: eine Schneideinrichtung (8) des Nackens, eine gebogene Gleitbahn (6), die ein Halsstück (7) mit der Fördereinrichtung (1, 2) bildet, eine bauchseitige Einschneidvorrichtung (10, 10') und eine Halteeinrichtung des anderen Teils des Fisches (11, 12), die parallel zur Fördereinrichtung (1, 2) angeordnet und gegenüber dieser bewegbar ist.

2. Vorrichtung nach Anspruch 1, dadurch gekennzeichnet, daß die Fördereinrichtung (1, 2) zum Halten des Kopfes des Fisches dient und daß das Haltestück (7) eine an die Dicke des Rumpfes des zu verarbeitenden Fisches angepaßte Größe besitzt.

3. Vorrichtung nach den Ansprüche 1 und 2, dadurch gekennzeichnet, daß die Fördereinrichtung des Kopfes durch ein Paar von übereinander angeordneten Endlosketten (1, 2) gebildet ist.

4. Vorrichtung nach den Ansprüchen 1 und 2, dadurch gekennzeichnet, daß die Einrichtung zum Halten des anderen Teils des Fisches aus einer Einrichtung mit übereinander angeordneten Fließbändern (11, 12) für das Halten des Rumpfes des Fisches gebildet ist.

5. Vorrichtung nach den Ansprüchen 1 und 4, dadurch gekennzeichnet, daß eines der Fließbänder (11) gegenüber dem anderen aufgrund einer elastischen Aufhängung (15, 15') bewegbar ist.

6. Vorrichtung nach den Ansprüchen 1 und 4, dadurch gekennzeichnet, daß mindestens eines der Fließbänder (11, 12) mit Spitzen versehen ist.

7. Vorrichtung nach den Ansprüchen 1 und 5, dadurch gekennzeichnet, daß die Fördereinrichtungen (1, 2) für den Kopf und das Halten (11, 12) des Rumpfes mit einem einzigen Antriebselement (16) über eine Übersetzungseinrichtung (17, 20) mit unterschiedlicher Übersetzung verbunden sind.

**Claims**

1. An apparatus for heading and eviscerating fish in which the entrails of the fish remain attached to its head and are withdrawn from the body of the fish during removal of the head, and comprising means (8) for cutting the neck of the fish and displaceable means (1, 2) for entraining the head and the body during the heading operation and in which the entraining means (1, 2) is used to hold only one of the parts of the fish on one side or other of its neck, characterised in that there are successively disposed along the entraining means (1, 2), seen in the direction of movement of the fish, means (8) for cutting the neck, a curved guide (6) which forms a passage (7) with the entraining means (1, 2), ventral incision means (10, 10') and means (11, 12) for holding the other part of the fish, which is arranged parallel to the entraining means (1, 2) and mobile relative thereto.

2. An apparatus as claimed in claim 1, characterised in that the entraining means (1, 2) is used to hold the head of the fish and in that the passage (7) has a width proportional to the thickness of the body of the fish to be treated.

3. An apparatus as claimed in claims 1 and 2, characterised in that the means for entraining the head is formed by a pair of endless chains (1, 2) arranged one above the other.

4. An apparatus as claimed in claims 1 and 2, characterised in that the means for holding the other part of the fish consists of a pair of endless belts (11, 12) arranged one above the other for holding the body of the fish.

5. An apparatus as claimed in claims 1 and 4, characterised in that one of the endless belts (11) is displaceable in relation to the other through an elastic suspension (15, 15').

6. An apparatus as claimed in claims 1 and 4, characterised in that at least one of the endless belts (11, 12) is provided with spikes.

7. An apparatus as claimed in claims 1 to 4, characterised in that the means (1, 2) for entraining the head and the means (11, 12) for holding the body are connected to a single drive element (16) by means of a transmission system (17, 20) with differential step-up of the angular speed for each of them.

Fig.1

**Fig.2**

# Fig.3

a)

5

b)

1    8

c)

1

7    6

d)

1    10

7    11

# Fig.4

a)

**1**

**11**

b)

**1**

**11**

c)

**1**

**11**

**23**

d)

**1**

**23'**

**11**

**23**